(19) Europäisches Patentamt
European Patent Office
Office européen des brevets

(11) Numéro de publication : **0 326 458 B1**

(12) **FASCICULE DE BREVET EUROPEEN**

(45) Date de publication du fascicule du brevet :
**23.10.91 Bulletin 91/43**

(51) Int. Cl.⁵ : **B60S 1/34, // B60S1/24**

(21) Numéro de dépôt : **89400132.0**

(22) Date de dépôt : **17.01.89**

(54) **Essuie-vitre à rayon variable pour automobile.**

(30) Priorité : **22.01.88 FR 8800685**

(43) Date de publication de la demande :
**02.08.89 Bulletin 89/31**

(45) Mention de la délivrance du brevet :
**23.10.91 Bulletin 91/43**

(84) Etats contractants désignés :
**DE ES GB IT**

(56) Documents cités :
**EP-A- 0 180 142
EP-A- 0 248 780
CH-A- 525 789
DE-U- 8 609 028
FR-A- 1 011 618
US-A- 4 641 390**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Bérard, Jean-François**
**53, Rue Thiers**
**F-92100 Boulogne Billancourt (FR)**
Inventeur : **Roue, Yves**
**41, Rue Raymond Poincaré**
**F-92000 Nanterre (FR)**
Inventeur : **Martin, Hervé**
**Résidence La Croix Audierne Bâtiment B**
**F-91190 Gif-sur-Yvette (FR)**

(74) Mandataire : **Saint Martin, René et al**
**Régie Nationale des Usines Renault 8 & 10,**
**avenue Emile Zola**
**F-92109 Boulogne Billancourt (FR)**

## Description

La présente invention se rapporte à un essuie-vitre à rayon variable pour automobile, comprenant un bras porte-balai monté articulé autour d'un axe d'articulation sur un élément oscillant d'entraînement.

Il existe différents types de dispositifs d'essuie-glaces à rayons variables ou à trajectoires non circulaires de manière à assurer l'essuyage des coins supérieurs des pare-brises.

On connaît des essuie-glaces dans lequel le porte-balai coulisse télescopiquement dans un boîtier animé d'un mouvement pendulaire. L'entraînement du bras télescopique peut être assuré par un mécanisme à engrenages à manivelle ou par un mécanisme à bielles.

On connaît des essuie-glaces dans lesquels le porte-balai est monté oscillant sur un support pivotant autour d'un axe. Dans certains essuie-glaces, le porte-balai est entraîné par l'intermédiaire d'engrenages. Dans le brevet français FR-A-2563.788, le porte-balai oscillant est monté articulé sur un élément oscillant et relié aux parties fixes. Ce dispositif fournit un balayage non circulaire.

La présente invention a pour but de fournir un dispositif essuie-vitre à balayage non circulaire, permettant l'augmentation du rayon de balayage, du type multiplicateur d'angle, dont le mécanisme est à bielles et manivelle. Ce dispositif, en position de repos, se range dans un boîtier de dimension réduite que l'on peut implanter sous le capot du véhicule. Ce boîtier s'adapte sur toutes les timoneries d'essuie-vitres multibalais entre la bielle de commande et le bras porte-balai. Il permet sur la majorité des véhicules de conserver une épure de balayage et une implantation de timonerie unique en direction à droite et à gauche.

L'essuie-vitre, selon l'invention, est caractérisé par le fait que l'élément oscillant d'entraînement est accouplé par une biellette de liaison à un levier d'orientation oscillant autour d'un axe fixe, ce levier d'orientation étant lui-même relié par l'intermédiaire d'une biellette de direction au bras.

Les caractéristiques techniques d'un mode particulier de réalisation de l'invention revendiquée, sont définies dans les revendications dépendantes.

L'invention va maintenant être décrite avec plus détails en se référant à des modes de réalisation donnés à titre d'exemples et représentés sur les dessins annexés sur lesquels :

    — la figure 1 est un premier mode de réalisation de l'essuie-vitre selon l'invention, en position de repos,

    — la figure 2 représente l'essuie-vitre de la figure 1 en position de balayage,

    — la figure 3 est une représentation de la surface balayée par l'essuie-vitre des figures 1 et 2,

    — la figure 4 est un second mode de réalisation de l'essuie-vitre selon l'invention, en position de repos,

    — la figure 5 représente l'essuie-vitre de la figure 4 en position de balayage,

    — la figure 6 est une représentation de la surface balayée par l'essuie-vitre des figures 4 et 5.

En se référant aux dessins, l'essuie-vitre comporte un bras porte-balai 1 oscillant.

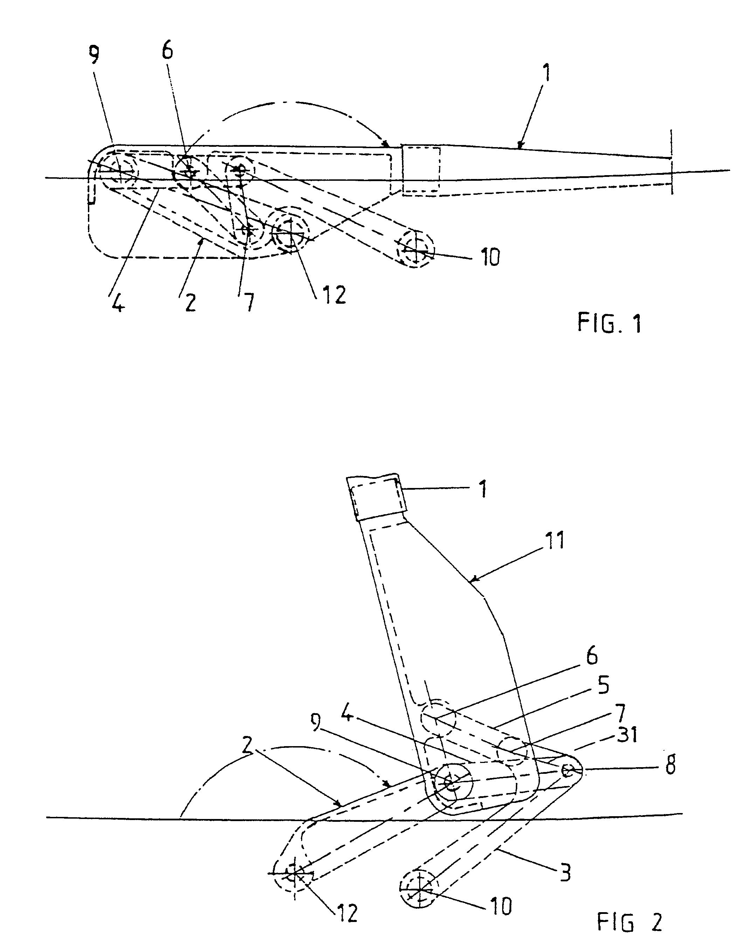

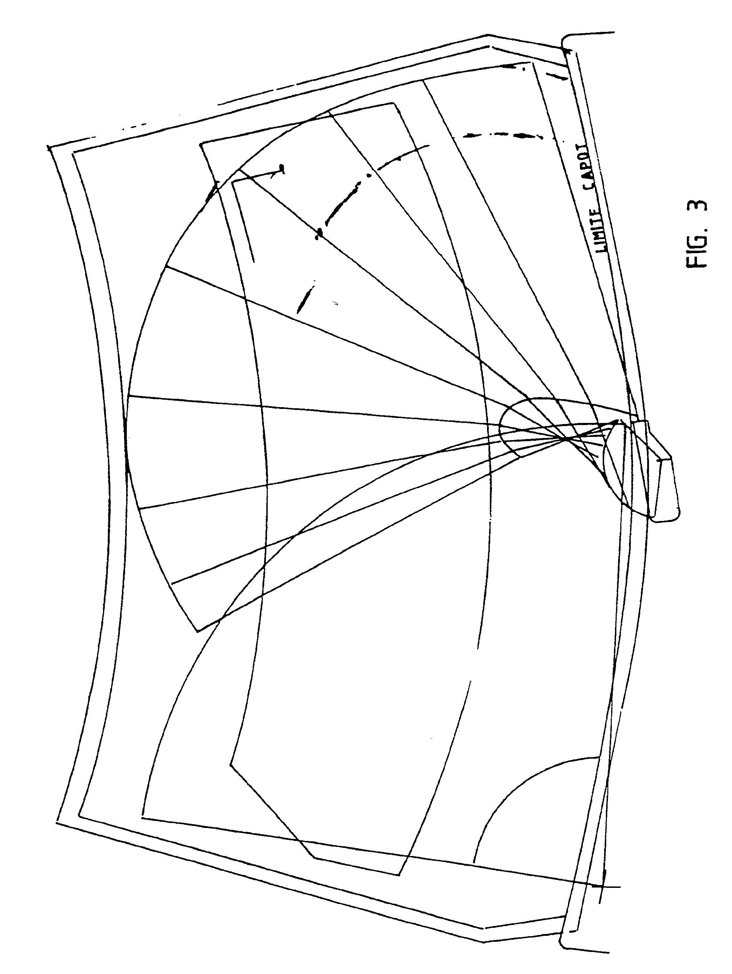

Dans le mode de réalisation des figures 1 à 3, le bras 1 est monté par l'intermédiaire d'un axe d'articulation 9 à l'extrémité d'une manivelle oscillante d'entraînement 2. Cette manivelle oscille autour de l'arbre d'essuie-glace 12 sur lequel elle est calée.

La manivelle 2 entraîne, par l'intermédiaire d'une biellette de liaison 4, un levier d'orientation oscillant 3. La biellette 4 est articulée autour de l'axe 9 au bras 1 et est reliée autour d'un axe d'articulation 8 au levier d'orientation 3. Le levier 3 oscille autour d'un axe fixe 10.

Le levier présente une articulation 7 formant un bras de levier par rapport à l'axe 8.

Le bras 1 est relié par l'intermédiaire d'une biellette de direction 5 à l'articulation 7. Cette biellette 5 est articulée autour d'un axe 6 au bras 1. La manivelle 2, la biellette 4 et le levier 3 forment un parallélogramme. Le bras 1 forme un carter 1 enveloppant le mécanisme et les articulations 9 et 6.

Le fonctionnement de ce mode de réalisation est le suivant :

Dans la position initiale représentée à la figure 1, le bras 1 est partiellement rabattu sous le capot en position basse. La manivelle oscillante d'entraînement 2 est en fin de course.

Lorsque le balayage est mis en marche, la manivelle d'entraînement 2 pivote sous l'action de l'arbre d'entraînement d'essuie-glace 12 et l'axe 9 du carter décrit un arc de cercle autour de l'axe 12. Le parallélogramme 2, 4, 3 entraîne le levier 3 autour de l'axe 10. L'orientation du bras de levier 31 change et la biellette 5 fait pivoter le bras 1 autour de l'axe 9. De cette manière le bras 1 pivote tout en se déplaçant verticalement.

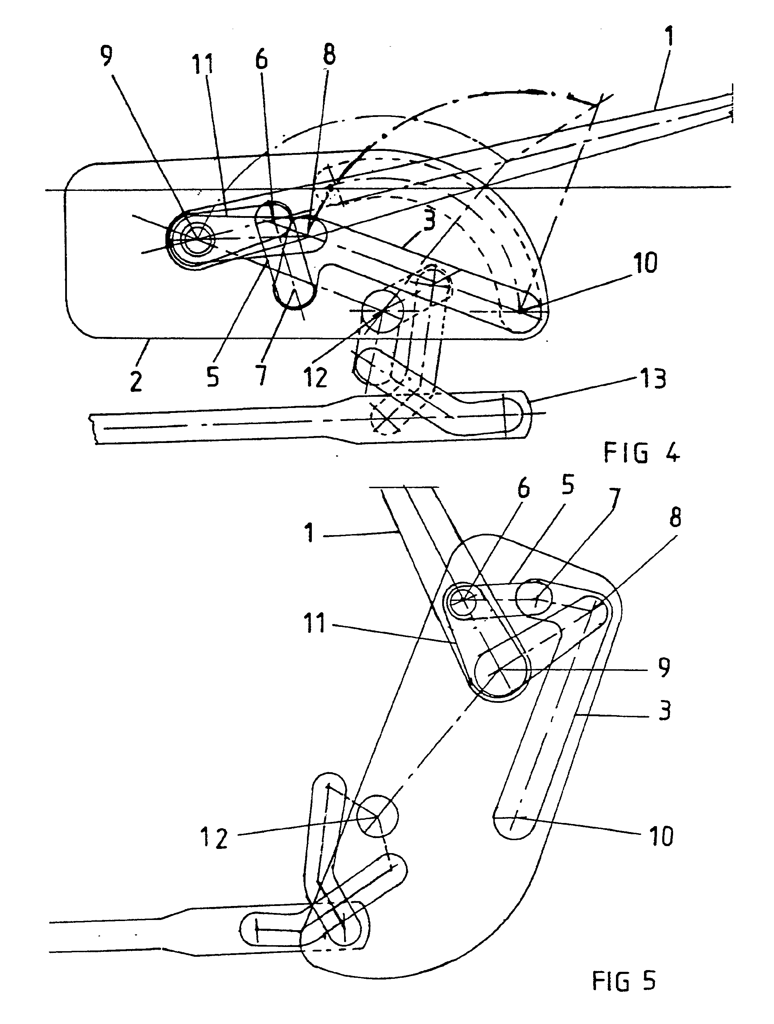

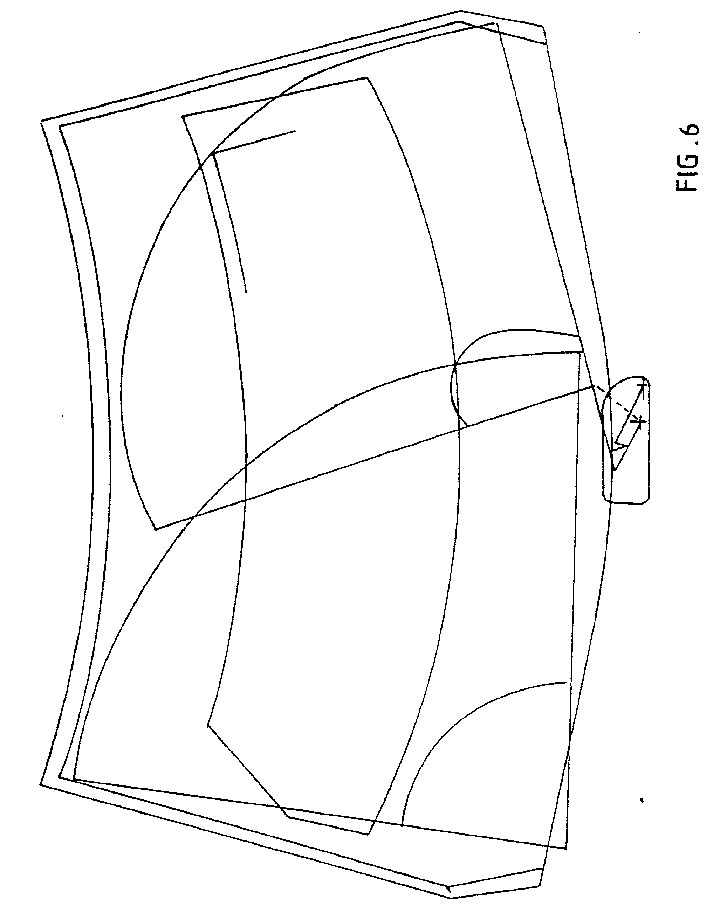

Dans le mode de réalisation des figures 4 à 6, le bras 1 est monté par l'intermédiaire d'un axe d'articulation 9 sur un carter oscillant d'entraînement 2. Ce carter 2 oscille autour de l'axe d'entraînement 12 sous l'action d'un mécanisme 13. Il entraîne par l'intermédiaire d'une biellette de liaison 4 un levier d'orientation 3. La biellette 4 est articulée autour de l'axe 9 au carter et est reliée autour d'un axe d'articulation 8 au levier d'orientation. Le levier 3 oscille autour d'un axe fixe 10.

Le levier présente une articulation 7 formant un bras de levier par rapport à l'axe 8.

L'arbre de l'articulation 9 est solidaire d'une manivelle 11. Cette manivelle est reliée par l'intermédiaire d'une biellette de direction 5 à l'articulation 7. Cette biellette 5 est articulée autour d'un axe 6 à la manivelle 1.

Le fonctionnement de ce mode de réalisation est le suivant.

En position de repos, l'essuie-vitre est représenté à la figure 4.

En pivotant autour de l'axe 12, le carter 2 fait pivoter le levier 3 autour de l'axe 10. Par l'intermédiaire de la biellette 5, il actionne la manivelle 11 solidaire en rotation autour de l'axe 9 du bras porte-balai.

**Revendications**

1. Essuie-vitre à rayon variable, comprenant un bras porte-balai monté articulé autour d'un axe d'articulation (9) sur un élément oscillant d'entraînement (2) caractérisé par le fait que ledit élément oscillant d'entraînement (2) est accouplé par une biellette de liaison (4) à un levier d'orientation (3) oscillant autour d'un axe fixe (10), ce levier d'orientation (3) étant lui-même relié par l'intermédiaire d'une biellette de direction (5) au bras (1).

2. Essuie-vitre selon la revendication 1, caractérisé par le fait que la biellette de liaison (4) est articulée à l'élément oscillant (2) autour de l'axe d'articulation (9).

3. Essuie-vitre selon l'une quelconque des revendications précédentes, caractérisé par le fait que l'élément oscillant d'entraînement (2) est une manivelle sur laquelle est articulé un carter (11) solidaire du bras (1).

4. Essuie-vitre selon l'une quelconque des revendications précédentes, caractérisé par le fait que l'élément oscillant d'entraînement (2) est un carter sur lequel le bras est monté oscillant autour d'un axe d'articulation et solidaire en rotation d'une manivelle (11) accouplée à la biellette de direction (5).

**Patentansprüche**

1. Scheibenwischer mit veränderlichem Radius, der einen Wischarm aufweist, welcher an einem Antriebsschwenkteil (2) um eine Gelenkachse (9) herum angelenkt ist, dadurch gekennzeichnet, daß das Antriebsschwenkteil (2) über eine Verbindungsstange (4) mit einem Richtungshebel (3) gekuppelt ist, der um eine feststehende Achse (10) verschwenkbar ist, wobei der Richtungshebel (3) über einen Verbindungshebel (5) mit dem Arm (1) verbunden ist.

2. Scheibenwischer nach Anspruch 1, dadurch gekennzeichnet, daß die Verbindungsstange (4) am Schwenkteil (2) über die Gelenkachse (9) angelenkt ist.

3. Scheibenwischer nach einem der vorhergehenden Ansprüche, dadurch gekennzeichnet, daß das Antriebsschwenkteil (2) ein Hebel ist, an dem ein Gehäuse (11) angelenkt ist, das mit dem Arm (1) fest verbunden ist.

4. Scheibenwischer nach einem der vorhergehenden Ansprüche, dadurch gekennzeichnet, daß das Antriebsschwenkteil (2) ein Gehäuse ist, an dem der Arm schwenkbar um eine Gelenkachse herum angeordnet ist und drehfest mit einem Hebel (11) verbunden ist, der mit dem Verbindungshebel (5) gekuppelt ist.

**Claims**

1. A variable-radius window wiper comprising a wiper blade carrier arm mounted pivotably about a pivot mounting axis (9) on an oscillating drive element (2) characterised in that said oscillating drive element (2) is coupled by a connecting rod (4) to an orientation lever (3) itch oscillates about a fixed axis (10), said orientation lever (3) itself being connected by means of a directional rod (5) to the arm (1).

2. A window wiper according to claim 1 characterised in that the connecting rod (4) is connected to the oscillating element (2) pivotably about the pivot mounting axis (9).

3. A window wiper according to either one of the preceding claims characterised in that the oscillating drive element (2) is a crank to itch a casing (11) which is fixed with respect to the arm (1) is pivotably connected.

4. A window wiper according to any one of the preceding claims characterised in that the oscillating drive element (2) is a casing to which the arm is mounted for oscillating movement about a pivot mounting axis and fixed in respect of rotary movement to a crank (11) coupled to the directional rod (5).

FIG. 1

FIG 2

FIG. 3

LIMITE CAPOT

EP 0 326 458 B1

FIG 4

FIG 5

FIG.6